# EUROPEAN PATENT SPECIFICATION

(11) **EP 3 480 923 B1**
(45) Date of publication and mention of the grant of the patent: **27.04.2022**
(21) Application number: 16907209.7
(22) Date of filing: 01.07.2016
(51) Int. Cl.: H02K 3/30, H02K 3/40, H02K 15/10, H01B 13/004

(54) **METHOD FOR PRODUCING CORONA DISCHARGE-PREVENTING STRUCTURE, CORONA DISCHARGE-PREVENTING STRUCTURE, AND ROTATING ELECTRICAL MACHINE**
VERFAHREN ZUR HERSTELLUNG EINER CORONAENTLADUNGSVERHINDERNDEN STRUKTUR, CORONAENTLADUNGSVERHINDERNDE STRUKTUR UND ELEKTRISCHE DREHMASCHINE
PROCÉDÉ DE PRODUCTION D'UNE STRUCTURE EMPÊCHANT UNE DÉCHARGE PAR EFFET COURONNE, STRUCTURE EMPÊCHANT UNE DÉCHARGE PAR EFFET COURONNE ET MACHINE ÉLECTRIQUE ROTATIVE

(43) Date of publication of application: 08.05.2019
(73) Proprietor: TOSHIBA MITSUBISHI-ELECTRIC INDUSTRIAL SYSTEMS CORPORATION, Chuo-ku Tokyo 104-0031 (JP)
(72) Inventor: MURA, Kotaro, Tokyo 104-0031 (JP); TAKENO, Masahiro, Tokyo 104-0031 (JP); TSUDA, Toshihiro, Tokyo 104-0031 (JP); YOSHIMITSU, Tetsuo, Tokyo 104-0031 (JP)
(74) Representative: Winter, Brandl - Partnerschaft mbB
(86) International application number: PCT/JP2016/003167
(87) International publication number: WO 2018/002974

(56) References cited:
- EP-A1- 2 645 374
- EP-A2- 1 933 444
- WO-A1-2016/104141
- WO-A1-2016/104141
- JP-A- 2006 246 599
- JP-A- 2006 246 599
- JP-A- 2007 174 816
- US-A1- 2007 149 073

## Description

### TECHNICAL FIELD

The present invention relates to a method for producing a corona discharge-preventing structure, a corona discharge-preventing structure, and a rotating electrical machine.

### BACKGROUND ART

When an unequal electric field portion occurs due to application of an electric field to an insulator, and the electric field at that portion exceeds an insulation-breakdown limit voltage, a local breakdown is caused there. When the local breakdown progresses dendritically, an electric tree is generated. The electric tree is believed to be generated by starting from a high electric field concentration parts such as an air gap or foreign matters between an electrode and an insulator, foreign matters, projections and voids in an insulator, and particularly in an air gap immediately under a corona discharge-preventing layer.

The corona discharge-preventing layer is a part where semiconductor tapes are wound around the outermost layer to prevent corona discharge with making no air gap between overlapping layers of mica insulation tape, particularly in a case that insulation structures have high-voltage parts.

In recent years, the use of inverters have been prevailing. In an inverter-driven motor, the lifetime of an insulating material of a coil conductive wire may be significantly reduced when the motor is used in a state where an impulse voltage including inverter surge repeatedly acts. Therefore, for example, such situation occurs, in which insulation for normal rated voltage 6.6 kV is forced to be used for an inverter-driven motor for rated voltage 3.3 kV. In such cases, corona discharge-preventing tapes are compelled to be used.

As an example of an electrical insulating structure for a conductor used in a rotating electrical machine, a coil conductor is typically covered with an insulator having an insulating material. Such a conductor easily reaching high temperatures often has a mica electrical insulating structure using mica which is a kind of silicate minerals as an insulating material of high insulation class capable of withstanding comparatively high temperatures.

As for the integrity of the insulating material, especially of the corona discharge-preventing layer, for example, IEC (International Electrotechnical Commission) is preparing for enactment of international standards prescribing a new insulation test method for accident prevention.

### PRIOR ART DOCUMENTS

### PATENT DOCUMENTS

JP 2006 - 246 599 A provides a semiconductor tape exhibiting corona resistance stably over a long term.

EP 1 933 444 A2 relates to an electrical machine including a winding made of a conductive material, wherein the electrical machine includes an insulating layer disposed around at least a portion of the winding having a dielectric constant that varies as a function of voltage.

Another insulation system is known from US 2015/0101845 A1.

### SUMMARY OF THE INVENTION

### PROBLEMS TO BE SOLVED BY THE INVENTION

For example, the insulation lifetime of a formed-wound electrical motor for high voltage is significantly influenced by a main insulation and a turn insulation which are disposed inside a stator core. If such a problem occurs where the corona discharge-preventing layers are vanished, reliability of the electrical motor degrades remarkably. In such main insulations and turn insulations, the mica electrical insulating structure is often used.

Further, the mica electrical insulating structure as the main insulation is formed, in most cases, by impregnating a mica insulating tape with epoxy resin. The mica insulating tape is composed of mica and an epoxy glass layer. The mica insulating tape thus configured is wound around a coil conductor and then impregnated with the epoxy resin, whereby insulation treatment by the mica electrical insulating structure is performed.

Even if the structure including the outermost corona discharge-preventing layer has undergone the impregnation process, voids will be generated around a part of the corona discharge-preventing layer disposed outermost. At this part of the layer, discharge is likely to occur, and should better be made of material resistant to discharge.

In some cases, however, the corona discharge cannot be suppressed so much as expected, due to the influence of the moisture in the environmental air.

This invention has been made in view of the above. An object of the invention is to enhance the anti-corona discharge property in an insulation structure.

### MEANS FOR SOLVING THE PROBLEM

According to the present invention, there is provided a method for producing a corona discharge-preventing structure for covering the outer surface of a to-be-insulated object, the method comprising: a tape producing step of producing a corona discharge-preventing tape; a main insulating step of winding a main insulating tape around the to-be-insulated object; and a winding step of winding the corona discharge-preventing tape around the outer surface of the to-be-insulated object around which the main insulating tape has been wound, wherein the tape producing step has: a mixture producing step of producing a mixture by adding the electrically conductive powder and the non-electrically conductive nanoparticles to the macromolecular polymer; a coating step of coating the mixture on a fiber-reinforced cloth; a heating-drying step of heating and drying the fiber-reinforced cloth coated with the mixture; and a cutting step of cutting the fiber-reinforced cloth into tapes after the heating-drying step, thereby providing a fiber-reinforced tape, wherein the coating step has a step of passing the fiber-reinforced cloth in a liquid-state resin in which carbon black and the non-electrically conductive nanoparticles are mixed together.

### ADVANTAGE OF THE INVENTION

According to the present invention, it is possible to enhance the anti-corona discharge property in an insulation structure.

### BRIEF DESCRIPTION OF THE DRAWINGS

FIG. 1 is a sectional longitudinal view illustrating the structure of a rotation electrical machine according to an embodiment.
FIG. 2 is a perspective view explaining an insulation structure and a tape-wound conductor according to the embodiment.
FIG. 3 is a flowchart showing a procedure of a method for producing an insulation structure according to the embodiment.
FIG. 4 is a sectional elevational view illustrating the state in Step S11 of the method for producing the corona discharge-preventing tape.
FIG. 5 is a sectional elevational view illustrating the state in Step S12 and Step S13 of the method for producing the corona discharge-preventing structure.
FIG. 6 is a sectional longitudinal view showing the final state of an insulation structure according to this embodiment.
FIG. 7 is a sectional longitudinal view showing a structure that incorporates the winding of a rotation electrical machine according to the embodiment.
FIG. 8 is a sectional elevational view illustrating the state at the first half of Step S50.
FIG. 9 is a sectional elevational view of the state at the latter half of Step S50.

### EMBODIMENTS FOR CARRYING OUT THE INVENTION

Hereinafter, with reference to the accompanying drawings, a method for producing a corona discharge-preventing structure, a corona discharge-preventing structure, and a rotating electrical machine according to embodiments of the present invention will be described. The same or similar portions are represented by the same reference symbols and will not be described repeatedly.

The followings exemplify the cases where an electrical insulating structure is applied to stator winding conductors of a rotating electrical machine. To-be-insulated objects or the objects to be insulated are not limited to the stator winding conductors. That is, it is applicable to any high voltage applied conductors as long as they have a structure where its outer surface is covered by the electrical insulating structure.

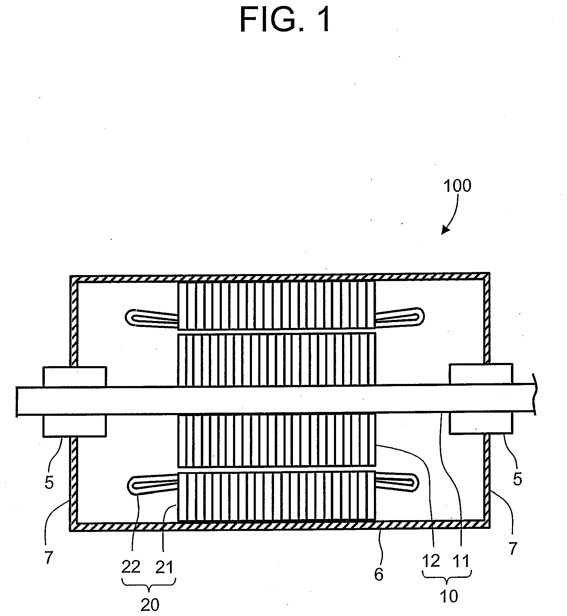

FIG. 1 is a sectional longitudinal view illustrating the structure of a rotation electrical machine according to an embodiment. The rotation electrical machine 100 has a rotor 10, a stator 20, a frame 6 surrounding radially outside of the rotor 10 and the stator 20, and bearing brackets 7 attached to the axial ends of the frame 6.

The rotor 10 has a rotor shaft 11 extending in its longitudinal direction and a rotor core 12 attached to radially outside the rotor shaft 11. The rotor shaft 11 is rotatably supported at both axial sides thereof by bearings 5. Each of the bearings 5 is stationarily supported by each of the bearing brackets 7.

The stator 20 has a stator core 21 disposed radially outside the rotor core 12 so as to be spaced therefrom and stator windings 22 penetrating inside the stator core 21.

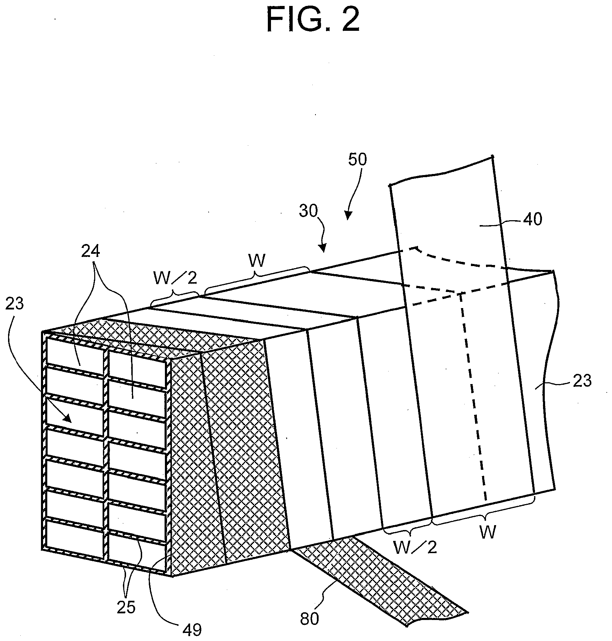

A plurality of stator slots (not illustrated) are formed along the inner surface of the stator core 21 with circumferential intervals therebetween and extend up to axially both ends of the stator core 21. Conductors 24 (FIG. 2) for the stator winding 22 are disposed in each stator slot.

FIG. 2 is a perspective view for explaining an electrical insulating structure and a tape-wound conductor according to the present embodiment.

The plurality of stator winding conductors 24 constituting the stator windings 22 form a laminated conductor 23. Specifically, seven conductors 24 are arranged in one column, and two columns form the laminated conductor 23 by fourteen conductors 24 in total. The number of laminated layers and the number of columns mentioned here are merely illustrative, and any number of the conductors 24 may be arranged in one or three or more columns . Each stator winding conductor 24 is applied with a turn insulation 25 provided outside thereof. Accordingly, the outer surface of the laminated conductor 23 is covered by the turn insulation 25.

A main insulation tape 40 serving as a main insulation is wound outside the laminated conductor 23 applied with the turn insulation 25 to form a main insulated part 49 outside the laminated conductor 23, whereby a tape-wound conductor 50 is obtained.

Further, a corona discharge-preventing tapes 80 are wound around the outermost layer, thus forming a corona discharge-preventing structure. The corona discharge-preventing tapes 80 are used to equalize the potential of the surface of each stator winding conductor 24 to the surface potential of the stator core 21, thereby to suppress the discharge between the stator winding conductors 24 and the stator core 21.

The corona discharge-preventing tapes 80 are helically wound, with each turn contacting the immediately preceding turn as shown in FIG. 2. Alternatively, the tape 80 may be wound, with each turn overlapping, in part, the immediately preceding turn.

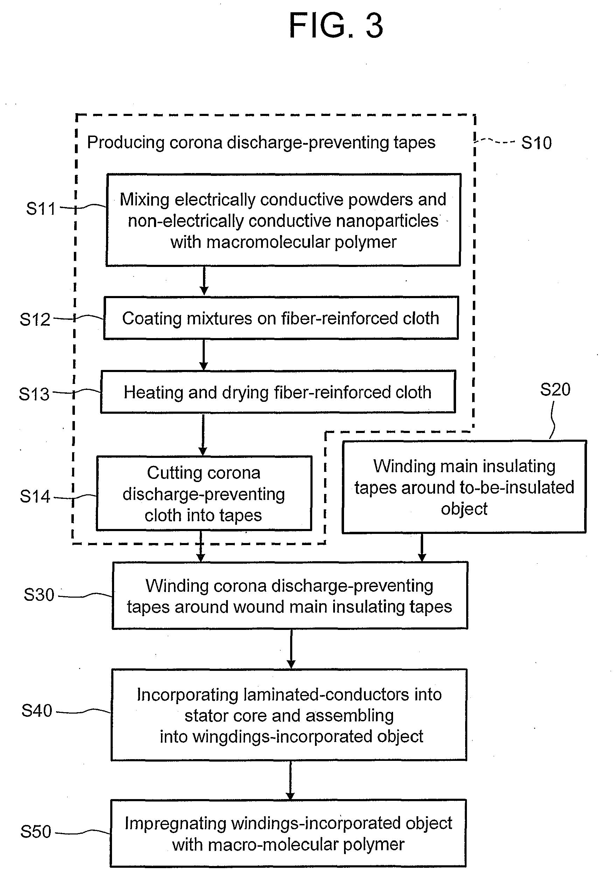

FIG. 3 is a flowchart showing a method for producing an insulation structure according to the present embodiment.

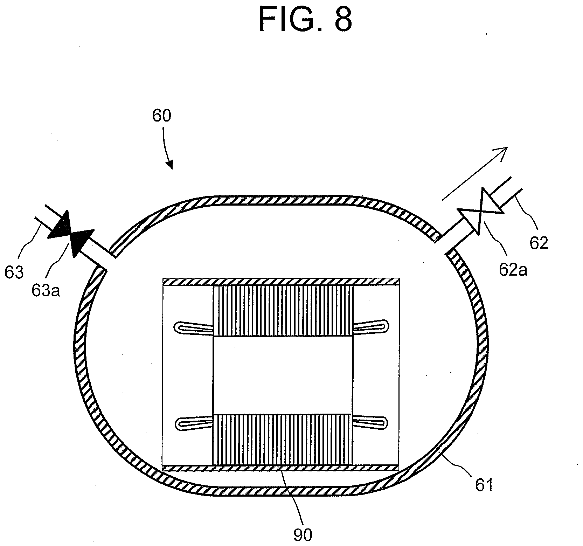

First, a corona discharge-preventing tapes 80 are produced (Step S10). On the other hand, a main insulating tapes 40 are wound around a laminated conductor 23 as a to-be-insulated object (Step S20). After performing Step S10 and Step S20, taping is performed, with winding the corona discharge-preventing tapes 80 around the wound main insulating tapes 40 (Step S30). Thereafter, laminated conductors 23 wound with the corona discharge-preventing tape 80 are incorporated into the stator core 21, assembling a windings-incorporated object 90 (FIG. 8), which will be described later (Step S40). Then, the windings-incorporated object 90 so assembled is set in an impregnation apparatus 60. The windings-incorporated object 90 is impregnated with macromolecular polymer (Step S50).

Step S10 of the method for producing the corona discharge-preventing tape 80 is described in detail below.

First, an electrically conductive powder 82 and non-electrically conductive nanoparticles 83 are mixed with a macromolecular polymer 84 to prepare a mixture (Step S11). The macromolecular polymer 84 is, for example, unsaturated polyester or epoxy resin.

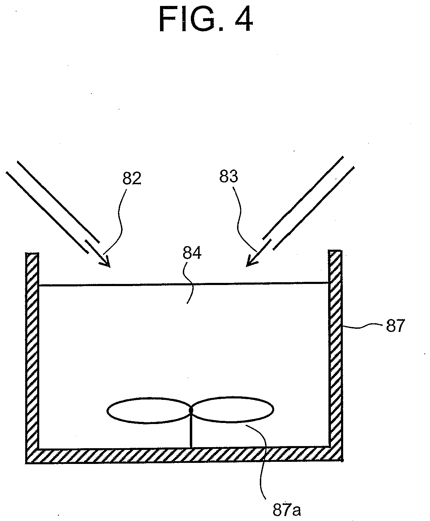

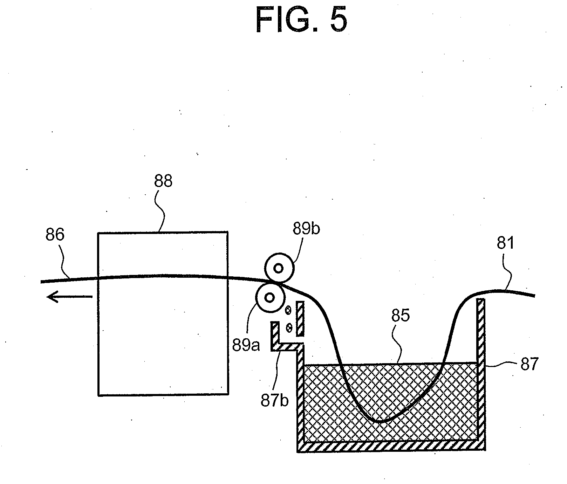

FIG. 4 is a sectional elevational view illustrating the state in Step S11 of the method for producing the corona discharge-preventing tape. As shown in FIG. 4, the electrically conductive powder 82 and the non-electrically conductive nanoparticles 83 are added to the macromolecular polymer 84 stored in a storage vessel 87. While the electrically conductive powder 82 and non-electrically conductive nanoparticles 83 are being added, the macromolecular polymer 84 is stirred by a stirring blade 87a. Mixture 85 (FIG. 5) is thereby produced.

The macromolecular polymer 84 may be replaced by, for example, varnish prepared by dissolving the macromolecular polymer 84 in a solvent.

As the electrically conductive powder 82, carbon black, is utilized. Carbon black is fine carbon particles having a diameter of about 3 nm to 500 nm, and is industrially produced. The electrically conductive powder 82 is not limited to carbon black, nonetheless. It may be other electrically conductive substance such as carbon nanotube. The electrically conductive powder 82 is added to the macromolecular polymer 84 which is electrically insulating and also dielectric, forming a low-resistance material of, for example, about 100 Ω·cm. The low-resistance material can have the same potential as the core, preventing discharge between the main insulating tape and the stator core 21.

Generally, the nanoparticles are said to include particles having a diameter of up to about 100 nm. The nanoparticles used in the present embodiment are assumed to be particles having a diameter of 100 nm or less, i.e., about several tens of nm. Here, particles having a diameter equal to or less than 100 nm shall be referred to as "nanoparticles."

As non-electrically conductive nanoparticles 83, particles of, for example, silicon dioxide (SiO₂), aluminum oxide (Al₂O₃), magnesium oxide (MgO) or boron nitride (BN), which are electrically non-electrically conductive substances, can be utilized.

Particles having a diameter of 100 nm or less may be produced by chemical growth from finer ones. Alternatively, particles having a diameter exceeding 100 nm may be pulverized to produce particles having a diameter of 100 nm or less. Further, surface modification may be applied so as to prevent particle aggregation in the macromolecular polymer 84.

Next, the mixture 85 is coated on fiber-reinforced cloth 81 (Step S12). The fiber-reinforced cloth 81 is, for example, glass cloth. FIG. 5 is a sectional elevational view illustrating the state in Step S12 and Step S13 of the method for producing the corona discharge-preventing structure. The fiber-reinforced cloth 81 is impregnated with the mixture 85 produced in the storage vessel 87. As a result, the mixture 85 adheres in the fiber-reinforced cloth 81 and to the surface thereof. The fiber-reinforced cloth 81 now having the mixture 85 thereon and therein is squeezed by rollers 89a and 89b. The surplus mixture 85 drips down and is collected in a receptacle 87b and returns into the storage vessel 87.

Then, the fiber-reinforced cloth 81 to which the mixture 85 is adhered is sent to a heating/drying apparatus 88. The heating/drying apparatus 88 heats and dries the fiber-reinforced cloth 81. As a result, a corona discharge-preventing cloth 86 is produced (Step S13).

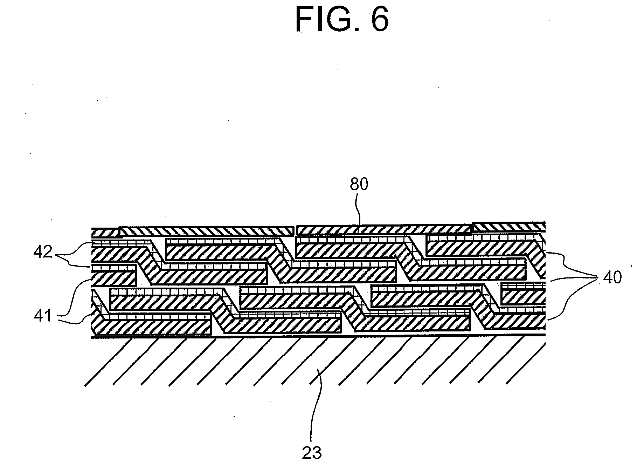

Next, the corona discharge-preventing cloth 86 is cut into corona discharge-preventing tapes 80 (FIG. 6) (Step S14).

FIG. 6 is a sectional longitudinal view showing the final state of an insulation structure according to this embodiment. The main insulating tapes 40 are wound around the laminated conductor 23, forming two layers. Further, the corona discharge-preventing tape 80 is wound around the main insulating tapes 40.

The corona discharge-preventing tape 80 is wound not to space the turns of the main insulating tape 40 in the direction the turns lie one another. The corona discharge-preventing tape 80 is so wound that they may tighten the main insulating tapes 40 from outward. Once the corona discharge-preventing tape 80 has been wound so, the resultant structure is impregnated with the macromolecular polymer 84.

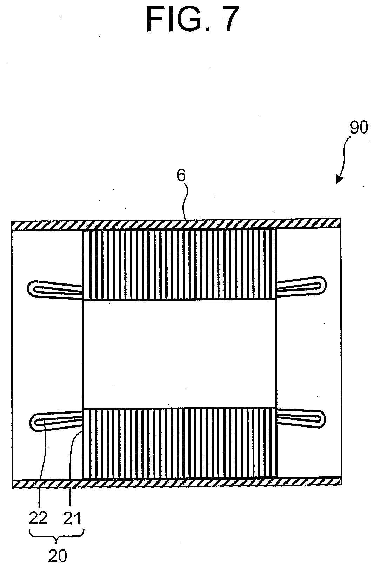

FIG. 7 is a sectional longitudinal view showing a structure that incorporates the windings of a rotation electrical machine according to the embodiment. The windings-incorporated object 90 has the stator core 21, the stator windings 22 and the frame 6 disposed radially outside the stator core 21 and the stator windings 22.

The stator windings 22 are formed by connecting the tape-wound conductors 50 (FIG. 2) housed in the plurality of slots (not illustrated). The slots are formed in the inner surface of the stator core 21 with circumferential intervals therebetween and extend up to the both axial ends of the stator core 21.

Then, the windings-incorporated object 90 is impregnated with macromolecular polymer, and the macromolecular polymer is solidified (Step S50). FIG. 8 is a sectional elevational view illustrating the state at the first half of Step S50. That is, FIG. 8 is a sectional elevational view of the structure being evacuated in the first half of Step S50. Specifically, the windings-incorporated object 90 is housed in a impregnation container 61 of an impregnator 60. The impregnation container 61 can be divided into upper and lower parts, for example, so as to allow the windings-incorporated object 90 to be put in and out thereof. The divided upper and lower parts of the impregnation container 61 can be connected by not-shown flange portions.

A macromolecular polymer supply valve 63a on a macromolecular polymer supply pipe 63 and a vacuum exhaust valve 62a on a vacuum exhaust pipe 62 are closed to bring the impregnation container 61 into a sealed state. After that, the vacuum exhaust valve 62a on the vacuum exhaust pipe 62 connected to, e.g., a vacuum pump (not illustrated) is opened to draw gas in the impregnation container 61. As a result, spaces in the main insulation tape 40 of the tape-wound conductor 50 in the windings-incorporated object 90 housed in the impregnation container 61 are also subjected to vacuum drawing.

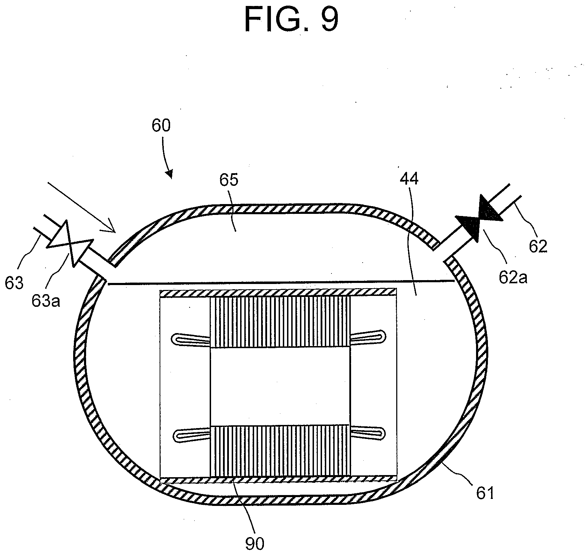

FIG. 9 is a sectional elevational view of the state at the latter half of Step S50. The vacuum exhaust valve 62a on the vacuum exhaust pipe 62 is closed after the impregnation container 61 is subjected to vacuum drawing. Then, the macromolecular polymer supply valve 63a on the macromolecular polymer supply pipe 63 is opened to supply the impregnating macromolecular polymer 44 into the impregnation container 61. The nanoparticle-containing impregnating macromolecular polymer 44 is supplied until the windings-incorporated object 90 is sufficiently impregnated with the nanoparticle-containing impregnating macromolecular polymer 44. The macromolecular polymer 44 is, for example, unsaturated polyester or epoxy resin.

When a state is reached where the windings-incorporated object 90 is sufficiently impregnated with the impregnating macromolecular polymer 44, pressurized gas 65 is supplied from the macromolecular polymer supply pipe 63 into the impregnation container 61 to pressurize the impregnation container 61. For example, inert gas having no reactivity with the impregnating macromolecular polymer 44 is used as the pressurized gas 65. As a result, impregnating macromolecular polymer 44 permeates the main insulation tape 40, the gap between the main insulating tapes 40, and the gap between main insulating tape and the corona discharge-preventing tape 80. Thereafter, the macromolecular polymer 44 that has impregnated is solidified. The solidification is achieved by heating the polymer if the polymer is a thermosetting resin such as epoxy resin.

After the sequence described above, a corona discharge-preventing tape 80 is produced, in which the electrically conductive powder 82 and the non-electrically conductive nanoparticles 83 are dispersed in the fiber-reinforced cloth 81. Since the electrically conductive powder 82 is dispersed in the corona discharge-preventing tape 80, the tape 80 has semiconducting property. Further, since the electrically conductive powder 82 is so dispersed, the non-electrically conductive nanoparticles 83 are also dispersed, increasing anti-corona discharge property.

This part is likely to undergo discharge, and should therefore be made of material resistant to discharge. If the non-electrically conductive nanoparticles 83 are mixed with the macromolecular polymer 84, the heat resistance will increase, and the anti-discharge property will also increase.

As stated above, the embodiment can achieve an advantage such as enhancement of the anti-corona discharge property of the insulation structure.

### [OTHER EMBODIMENTS]

While the embodiment of the present inventions has been described, the embodiment has been presented by way of example only, and is not intended to limit the scope of the invention. Furthermore, the above-described embodiments may be put to use in various different ways and, if appropriate, any of the components thereof may be omitted, replaced or altered in various different ways

All the above-described embodiments and the modifications made to them are within the scope of the present invention, which is specifically defined by the appended claims, as well as their equivalents.

### EXPLANATION OF REFERENCE SYMBOLS

5: bearing, 6: frame, 7: bearing bracket, 10: rotor, 11: rotor shaft, 12: rotor core, 20: stator, 21: stator core, 22: stator winding, 23: laminated conductor, 24: stator winding conductor, 25: turn insulator, 30: insulation structure, 40: main insulating tape, 41: main insulation layer, 42: fiber reinforcement part, 43: joining macromolecular polymer, 44: impregnating macromolecular polymer, 49: main insulation part, 50: tape-wound conductor, 60: impregnation apparatus, 61: vessel, 62: evacuation pipe, 62a: evacuation valve, 63: macromolecular polymer supply pipe, 63a: macromolecular polymer supply valve, 65: pressurized gas, 80: corona discharge-preventing tape, 81: fiber-reinforced cloth, 82: electrically conductive powder, 83: non-electrically conductive nanoparticle, 84: macromolecular polymer, 85: mixture, 86: corona discharge-preventing cloth, 87: storage vessel, 87a: stirring blade, 87b: receptacle, 88: heating/drying apparatus, 89a, 89b: roller, 90: windings-incorporated object, 100: rotation electrical machine

## Claims

1. A method for producing a corona discharge-preventing structure for covering outer surface of a to-be-insulated object, the method comprising:
a tape producing step of producing a corona discharge-preventing tape (80);
a main insulating step of winding a main insulating tape (40) around the to-be-insulated object; and
a winding step of winding the corona discharge-preventing tape (80) around the outer surface of the to-be-insulated object around which the main insulating tape (40) has been wound, wherein the tape producing step has:
a mixture (85) producing step of producing a mixture (85) by adding an electrically conductive powder (82) and non-electrically conductive nanoparticles (83) to a macromolecular polymer (84);
a coating step of coating the mixture (85) on a fiber-reinforced cloth (81); and
a heating-drying step of heating and drying the fiber-reinforced (81) cloth coated with the mixture (85);
**characterized in that**
the electrically conductive powder (82) is carbon black and the macromolecular polymer (84) is a liquid-state resin;
the tape producing step further comprises a cutting step of cutting the fiber-reinforced cloth (81) into tapes after the heating-drying step, thereby providing a fiber-reinforced tape; and
the coating step has a step of passing the fiber-reinforced cloth (81) in a liquid-state resin in which carbon black and the non-electrically conductive nanoparticles (83) are mixed together.

2. The method for producing a corona discharge-preventing structure, according to claim 1, wherein
the fiber-reinforced cloth (81) is glass cloth.

3. The method for producing a corona discharge-preventing structure, according to claim 1 or 2, wherein
the non-electrically conductive nanoparticles (83) are at least one type selected from a group consisting of silicon dioxide, aluminum oxide, magnesium oxide and boron nitride.

## Patentansprüche

1. Verfahren zur Herstellung einer Koronaentladungsverhinderungsstruktur zum Abdecken einer äußeren Oberfläche eines zu isolierenden Objekts, wobei das Verfahren folgende Schritte aufweist:
einen Bandherstellungsschritt zur Herstellung eines Koronaentladungsverhinderungsbandes (80);
einen Hauptisolierungsschritt, bei welchem ein Hauptisolierungsband (40) um das zu isolierende Objekt gewickelt wird; und
einen Wicklungsschritt zum Wickeln des Koronaentladungsverhinderungsbandes (80) um die äußere Oberfläche des zu isolierenden Objekts, um welches das Hauptisolierungsband (40) gewickelt worden ist, wobei der Bandherstellungsschritt folgende Schritte aufweist:
einen Schritt zu Herstellung einer Mischung (85), bei welchem eine Mischung (85) durch Zugabe eines elektrisch leitenden Pulvers (82) und nicht elektrisch leitenden Nanopartikeln (83) zu einem makromolekularem Polymer (84) hergestellt wird;
einen Beschichtungsschritt, bei welchem die Mischung (85) auf ein faserverstärktes Gewebe (81) aufgetragen wird; und
einen Erwärmungs-Trocknungsschritt, bei welchem das mit der Mischung (85) beschichtete faserverstärkte Gewebe (81) erwärmt und getrocknet wird;
**dadurch gekennzeichnet, dass**
das elektrisch leitende Pulver (82) Ruß ist und das makromolekulare Polymer (84) ein Harz in flüssigem Zustand ist;
der Bandherstellungsschritt ferner einen Schneideschritt aufweist, bei welchem das faserverstärkte Gewebe (81) nach dem Erwärmungs-Trocknungsschritt in Bänder geschnitten wird, wodurch ein faserverstärktes Band bereitgestellt wird; und
der Beschichtungsschritt einen Schritt hat, bei welchem das faserverstärkte Gewebe (81) in ein Harz in flüssigem Zustand hindurchgeführt wird, in welchem Ruß und die elektrisch nichtleitenden Nanopartikel (83) miteinander vermischt sind.

2. Verfahren zur Herstellung einer Koronaentladungsverhinderungsstruktur gemäß Anspruch 1, wobei
das faserverstärkte Gewebe (81) ein Glasgewebe ist.

3. Verfahren zur Herstellung einer Koronaentladungsverhinderungsstruktur gemäß Anspruch 1 oder 2, wobei
die nicht elektrisch leitenden Nanoartikel (83) mindestens ein Typ sind der aus einer Gruppe ausgewählt ist, die aus Siliziumdioxid, Aluminiumoxid, Magnesiumoxid und Bornitrid besteht.

## Revendications

1. Procédé pour produire une structure empêchant une décharge par effet couronne pour recouvrir une surface externe d'un objet à isoler, le procédé comprenant :
une étape de production de ruban consistant à produire un ruban empêchant une décharge par effet couronne (80) ;
une étape d'isolation principale consistant à enrouler un ruban d'isolation principale (40) autour de l'objet à isoler ; et
une étape d'enroulement consistant à enrouler le ruban empêchant une décharge par effet couronne (80) autour de la surface externe de l'objet à isoler autour duquel le ruban d'isolation principale (40) a été enroulé,
dans lequel l'étape de production de ruban présente :
une étape de production de mélange (85) consistant à produire un mélange (85) en ajoutant une poudre électriquement conductrice (82) et des nanoparticules électriquement non-conductrices (83) à un polymère macromoléculaire (84) ;
une étape de revêtement consistant à revêtir le mélange (85) sur un tissu renforcé en fibres (81) ; et
une étape de chauffage-séchage consistant à chauffer et sécher le tissu renforcé en fibres (81) revêtu du mélange (85) ;
**caractérisé en ce que**
la poudre électriquement conductrice (82) est du noir de carbone et le polymère macromoléculaire (84) est une résine à l'état liquide ;
l'étape de production de ruban comprend en outre une étape de découpe consistant à découper le tissu renforcé en fibres (81) en rubans après l'étape de chauffage-séchage, fournissant ainsi un ruban renforcé en fibres ; et
l'étape de revêtement présente une étape consistant à passer le tissu renforcé en fibres (81) dans une résine à l'état liquide dans laquelle le noir de carbone et les nanoparticules électriquement non-conductrices (83) sont mélangés ensemble.

2. Procédé destiné à produire une structure empêchant une décharge par effet couronne, selon la revendication 1, dans lequel
le tissu renforcé en fibres (81) est un tissu de verre.

3. Procédé pour produire une structure empêchant une décharge par effet couronne, selon l'une quelconque des revendications 1 ou 2, dans lequel
les nanoparticules électriquement non-conductrices (83) sont au moins un type sélectionné parmi un groupe constitué par du dioxyde de silicium, de l'oxyde d'aluminium, de l'oxyde de magnésium et du nitrure de bore.
